# EUROPÄISCHE PATENTSCHRIFT

(11) **EP 1 247 686 B1**
(45) Veröffentlichungstag und Bekanntmachung des Hinweises auf die Patenterteilung: **31.05.2006**
(21) Anmeldenummer: 02005210.6
(22) Anmeldetag: 07.03.2002
(51) Int. Cl.: B60K 35/00

(54) **Verfahren und Vorrichtung zur Auswahl von Fahrzeugfunktionen in einem Kraftfahrzeug**
Method and arrangement for the selection of vehicle functions in a motor vehicle
Procédure et arrangement pour choisir des fonctions de véhicule dans une automobile

(30) Priorität: 04.04.2001 DE 10116715; 23.05.2001 DE 10125165
(43) Veröffentlichungstag der Anmeldung: 09.10.2002
(73) Patentinhaber: Volkswagen Aktiengesellschaft, 38436 Wolfsburg (DE)
(72) Erfinder: Ertzsänger, Frank, 38442 Wolfsburg (DE); Almkermann, Jens Arik, Dipl.-Ing., 38547 Calberlah (DE)

(56) Entgegenhaltungen:
- EP-A- 0 771 686
- DE-A- 3 317 595
- DE-A- 19 941 951

## Beschreibung

Die Erfindung betrifft ein Verfahren zur Auswahl von Fahrzeugfunktionen in einem Kraftfahrzeug, bei welchen den Fahrzeugfunktionen zugeordnete Auswahlinformationen in einer hierarchischen Menüstruktur angeordnet werden, bei welchem die im wesentlichen hierarchische Menüstruktur zur Auffindung zumindest einer Auswahlinformation durch einen Benutzer durchlaufen wird, bei welchem aus der im wesentlichen hierarchischen Menüstruktur die zumindest eine Auswahlinformation durch den Benutzer ausgewählt wird, und bei welchem die der zumindest einen Auswahlinformation zugeordneten Fahrzeugfunktionen aktiviert werden. Außerdem betrifft die Erfindung eine Vorrichtung zur Verwirklichung eines vorbeschriebenen Verfahrens. Durch das erfindungsgemäße Verfahren sowie die erfindungsgemäße Vorrichtung soll die Menüführung zur Auswahl von Fahrzeugfunktionen vereinfacht werden.

Aus der Druckschrift EP 0 199 916 B2 ist bereits eine zentrale Bedienungsein- und Informationsausgabevorrichtung für Zusatzgeräte von Fahrzeugen bekannt. Der in dieser Druckschrift beschriebenen Vorrichtung liegt die Aufgabe zugrunde, eine ergonomisch günstig gestaltete, sinnvoll und einfach bedienbare und räumlich vorteilhaft aufgebaute zentrale Bedienungsein- und Informationsausgabe für Zusatzgeräte von Fahrzeugen zu schaffen. Ein bekanntes Informationssystem mit einer Anzeigeeinheit, deren Anzeige zur Darstellung von Informationen und Funktionsauswahltabellen (Menüs) untergliederbar ist, wird dadurch erweitert, daß eine Bedienungseingabe mit zusätzlichen Bedienelementen erfolgen kann. Die zusätzlichen Bedienelemente sind aus der Menütechnik des Systems ausgelagert. Ein direkter Zugriff auf bestimmte Grundfunktionen von gesteuerten Zusatzgeräten ist jederzeit und unabhängig vom augenblicklich ausgewählten Menü über die zusätzlichen Bedienelemente möglich. Das bedeutet, daß einzelne Fahrzeugfunktionen unabhängig vom jeweils gewählten Menü über spezielle Bedienelemente ausgewählt werden können. Die zusätzliche Anordnung von dedizierten Bedienelementen bedeutet einen erhöhten Kostenaufwand bei der Fertigung. Außerdem wird die Bedienung der menügesteuerten Informationsanzeige und Funktionsauswahl durch zusätzliche Bedienelemente für einen Benutzer unübersichtlich.

Daraus resultiert sowohl eine nicht komfortable Benutzersteuerung als auch eine Ablenkung des Fahrers vom Straßengeschehen.

Die DE 199 41 951 A1 offenbart eine Anzeigeeinheit gemäß dem Oberbegriff des Anspruchs 1 für eine Fahrzeug-Heiz- und/oder Klimaanlage, wobei die Anzeigeeinheit einen multifunktionalen Bordmonitor mit zugehörigen ersten Bedienelementen umfasst. Dem Bordmonitor für die Fahrzeug-Heiz- oder Klimaanlage sind dabei zweite separate Bedienelemente zugeordnet, wobei den separaten Bedienelementen eine erhöhte Priorität zugeordnet ist, über die mindestens Grundeinstellungen der Heiz- und/oder Klimaanlage veränderbar sind.

Die EP 0 771 686 A2 offenbart ein Informations-Anzeigegerät für Fahrzeuge mit einem Mittel zum Feststellen eines laufenden Zustands, einem Speichermittel zum Speichern einer Information zur Anzeige gemäß jeweiliger laufender Zustände und Wichtigkeitsgrade von Information, einem Anzeigemittel zur Informationsanzeige und einem Steuermittel zum Anzeigen der Anzeigeinformation in einem Anzeigebereich in Abhängigkeit des Wichtigkeitsgrades der Information.

Ausgehend von den Nachteilen bekannter Steuerungs- und Informationssysteme liegt dem erfindungsgemäßen Verfahren sowie der erfindungsgemäßen Vorrichtung die Aufgabe zugrunde, eine komfortable und schnell bedienbare Auswahl von Fahrzeugfunktionen in einem Kraftfahrzeug zu ermöglichen.

Die Aufgabe wird dadurch gelöst, daß zumindest eine Auswahlinformation in Abhängigkeit einer Vorgabe in einer obersten Menüebene der im wesentlichen hierarchischen Menüstruktur angeordnet wird, wodurch die zumindest eine in der obersten Menüebene angeordnete Auswahlinformation durch den Benutzer direkt auswählbar wird. Durch die Anordnung einer Auswahlinformation für eine Fahrzeugfunktion in der obersten Menüebene einer Menüstruktur in Abhängigkeit von einer Vorgabe steht dem Fahrer stets die passende Fahrzeugfunktion direkt zur Verfügung. Das bedeutet, daß sowohl die benötigte Fahrzeugfunktion dem Fahrer schnell zur Verfügung steht als auch, daß der Fahrer nicht vom Verkehrsgeschehen abgelenkt wird. Auch resultiert aus dem erfindungsgemäßen Verfahren ein erhöhter Benutzerkomfort. Der Fahrer möchte nicht durch unnütze Fahrzeugfunktionen abgelenkt werden.

Vorteilhaft ist, wenn die Vorgaben in Abhängigkeit von einer Fahrsituation oder auch in Abhängigkeit von Benutzervorgaben bestimmt werden. Viele Fahrzeugfunktionen sind in bestimmten Fahrsituationen unnütz und brauchen deshalb dem Fahrer nicht zur Auswahl gestellt zu werden. Durch die Bestimmung der Vorgabe in Abhängigkeit von einer Fahrsituation steht die für die aktuelle Fahrsituation passende Fahrzeugfunktion direkt zur Verfügung. Auch kann der Fahrer seine Präferenzen vorgeben, wodurch er nicht, wie bisher üblich, die gesamte Menüstruktur nach der gewünschten Fahrzeugfunktion durchsuchen muß, sondern die gewünschte Funktion schnell erreichen kann.

Um dem Fahrer die Auswahl einer Auswahlinformation zur Aktivierung einer Fahrzeugfunktion möglichst einfach zu ermöglichen, wird vorgeschlagen, daß die im wesentlichen hierarchische Menüstruktur mit Hilfe einer Anzeigeeinrichtung dargestellt wird. Die Anzeigeeinrichtung kann beispielsweise ein LCD-Display, ein TFT-Display oder auch jedes andere Display sein.

Um einen besseren Überblick über relevante und weniger relevante Fahrzeugfunktionen zu erhalten, oder um einige Fahrzeugfunktionen in syntaktische Einheiten zusammenfassen zu können, wird vorgeschlagen, daß mit Hilfe der Anzeigeeinrichtung die zumindest eine Auswahlinformation in Abhängigkeit der Vorgabe in zumindest einem Abschnitt der Anzeigeeinrichtung dargestellt wird. Hierbei kann beispielsweise die Steuerung der Klimaanlage in einem ersten Anzeigefeld, die Steuerung des Navigationsgerätes in einem zweiten Anzeigefeld und die Radiosteuerung in einem dritten Anzeigefeld dargestellt werden. Auch kann die Wahl des für eine Funktionsgruppe jeweilig gewählten Anzeigefeldes in Abhängigkeit von einer Fahrsituation und/oder von Benutzerpräferenzen eingestellt werden. Dabei kann beispielsweise die Zuordnung der Klima-Steuerung in Abhängigkeit von der Fahrtdauer, der Innen- sowie der Außentemperatur bestimmt werden. Das Navigationsgerät kann bei Stillstand des Fahrzeuges beispielsweise mit einer alphanumerischen Tastatur eingestellt werden und bei der Fahrt wird eine Steuerung des Navigationsgerätes nicht mehr angezeigt, sondern lediglich eine akustische Zielführung angeboten. Die Anzeige der Steuerung der Musikanlage kann beispielsweise individuell vom Fahrer konfiguriert werden.

Um eine Unterscheidung der einzelnen Auswahlinformationen zu ermöglichen, sowie eine Identifizierung der mit der Auswahlinformation verbundenen Fahrzeugfunktion zu schaffen, wird vorgeschlagen, daß die Auswahlinformation als alphanumerische Zeichen dargestellt werden. Mit Hilfe der alphanumerischen Zeichen kann eine Klartext-Darstellung der mit der Auswahlinformation verbundenen Fahrzeugfunktion vorgenommen werden.

Eine besonders einfache Identifikation der mit einer Auswahlinformation verbundenen Fahrzeugfunktion wird dadurch erreicht, daß die Auswahlinformation als Piktogramm dargestellt wird. Das Piktogramm zeigt mit wenigen Bildpunkten eine die jeweilige Fahrzeugfunktion identifizierende Zeichnung.

Um den Blick des Fahrers nicht von der Straße abzulenken, wird vorgeschlagen, daß die zumindest eine in der obersten Menüebene angezeigte Auswahlinformation akustisch ausgegeben wird und daß diese zumindest eine ausgegebene Auswahlinformation durch den Benutzer akustisch ausgewählt wird. Dem Benutzer wird die verfügbare Auswahlinformation beispielsweise über eine Sprachausgabe mitgeteilt. Über ein einfaches Sprachkommando kann der Benutzer diese Funktion aktivieren oder deaktivieren.

Eine Personalisierung der einer Fahrsituation zugeordneten Auswahlinformation läßt sich dadurch schaffen, daß die zumindest eine bei einer bestimmten Fahrsituation in der obersten Menüebene angeordnete Auswahlinformation durch den Benutzer festgelegt wird und daß diese Auswahl gespeichert wird. Der Benutzer kann festlegen, welche Fahrzeugfunktionen ihm in bestimmten Fahrsituationen in der obersten Menüebene angeboten werden sollen. Durch die Personalisierung der Menüstruktur erhöht sich der Benutzerkomfort des erfindungsgemäßen Verfahrens.

Die erfindungsgemäße Aufgabe wird auch mit Hilfe eines weiteren Gegenstands der Erfindung gelöst. Dazu wird eine Vorrichtung zur Auswahl von Fahrzeugfunktionen in einem Kraftfahrzeug vorgeschlagen. Diese Vorrichtung eignet sich zur Verwirklichung eines Verfahrens nach einem der zuvor beschriebenen Verfahren. Die erfindungsgemäße Vorrichtung ist dadurch gekennzeichnet, daß eine Auswahleinrichtung vorgesehen ist, wobei die Auswahleinrichtung eine Anordnung von Auswahlinformationen in Abhängigkeit von einer Vorgabe in einer im wesentlichen hierarchischen Menüstruktur ermöglicht, und daß die Auswahleinrichtung eine Anordnung zumindest eine durch die Vorgabe bestimmte Auswahlinformation in der obersten Menüebene ermöglicht. Diese Vorrichtung ermöglicht dem Benutzer eine schnelle und komfortable Auswahl und Aktivierung von Fahrzeugfunktionen in Abhängigkeit von einer Vorgabe. Die Vorgabe kann eine Fahrsituation oder auch Benutzerpräferenzen sein.

Es wird vorgeschlagen, daß eine Auswerteeinrichtung vorgesehen ist, wobei die Auswerteeinrichtung eine Auswertung einer aktuellen Fahrsituation und eine Übermittlung an die Auswahleinrichtung bewirkt. Die Vorgabe wird dann anhand der ermittelten Fahrsituation bestimmt. Das ermöglicht es, daß die Menüstruktur der aktuellen Fahrsituation angepasst ist.

Auch wird vorgeschlagen, daß eine die in der Auswahleinrichtung gespeicherte, im wesentlichen hierarchische Menüstruktur anzeigende Anzeigeeinrichtung vorgesehen ist. Die Anzeige kann aus einem Bildschirm gebildet sein. Dabei ist es vorteilhaft, wenn zwei Bildschirme vorgesehen sind, wobei ein erster Bildschirm Auswahlinformationen in Abhängigkeit einer ersten Vorgabe anzeigt und wobei ein zweiter Bildschirm Auswahlinformationen in Abhängigkeit einer zweiten Vorgabe anzeigt. Dadurch können auf den getrennten Bildschirmen unterschiedliche Auswahlinformationen angezeigt werden. Diese können sowohl nach Wichtigkeit als auch syntaktisch geordnet angezeigt werden. Die Anzeigeeinrichtung kann sowohl als Flachbildschirm als auch als Röhrenbildschirm ausgebildet sein. In Frage kommen alle geeigneten Anzeigeeinrichtungen, wie beispielsweise Flüssigkristallanzeigen, Röhrenanzeigen, TFT-Anzeigen und ähnliche.

Eine Navigation in der hierarchischen Menüstruktur wird dadurch gewährleistet, daß die Auswahleinrichtung Mittel zur Navigation in der hierarchischen Menüstruktur aufweist. Dies kann beispielsweise ein am Lenkrad angeordnetes Bedienelement sein. Das Bedienelement kann ein Cursorrad, Bedientasten oder einen Navigationshebel aufweisen. Auch wird vorgeschlagen, daß die Navigationsmittel zumindest zwei Auswahltaster aufweisen. Dadurch ist ein auf- und abscrollen innerhalb eines Menüs möglich.

Es wird ebenfalls vorgeschlagen, daß die Navigationsmittel in der Anzeigeeinrichtung integriert sind, wobei die Anzeigeeinrichtung eine berührungsempfindliche Anzeige aufweist. Dadurch ist die Navigation innerhalb der hierarchischen Menüstruktur mit Hilfe von Berührungen der Anzeigeeinrichtung (Touchscreen) möglich.

Um einzelne Auswahlinformationen anwählen zu können, wird vorgeschlagen, daß die Auswahleinrichtung Mittel zur Auswahl einer Auswahlinformation aufweist. Auch hier können die Mittel zur Auswahl einer Auswahlinformation aus am Lenkrad angebrachten Bedienelementen, aus berührungsempfindlichen Displays oder einer Sprachsteuerung gebildet sein.

Eine Ablenkung des Fahrers vom Straßengeschehen wird dadurch vermieden, daß die Vorrichtung eine die in der Auswahleinrichtung gespeicherte hierarchische Menüstruktur zumindest teilweise ausgebende akustische Ausgabeeinrichtung aufweist. Die akustische Ausgabeeinrichtung kann für eine Sprachausgabe genutzt werden. Dem Fahrer werden die Menüpunkte über eine Sprachausgabe mitgeteilt.

Vorteilhaft lässt sich die Vorrichtung bedienen, wenn sie, wie vorgeschlagen, in der Mittelkonsole eines Kraftfahrzeugs vorgesehen ist.

Im folgende wird die Erfindung anhand einer ein Ausführungsbeispiel zeigenden Zeichnung näher erläutert. In der Zeichnung zeigen:
- Fig. 1: eine hierarchische Menüstruktur;
- Fig. 2: eine schematische Darstellung einer erfindungsgemäßen Vorrichtung;
- Fig. 3: eine Anordnung der Vorrichtung in einer Mittelkonsole.

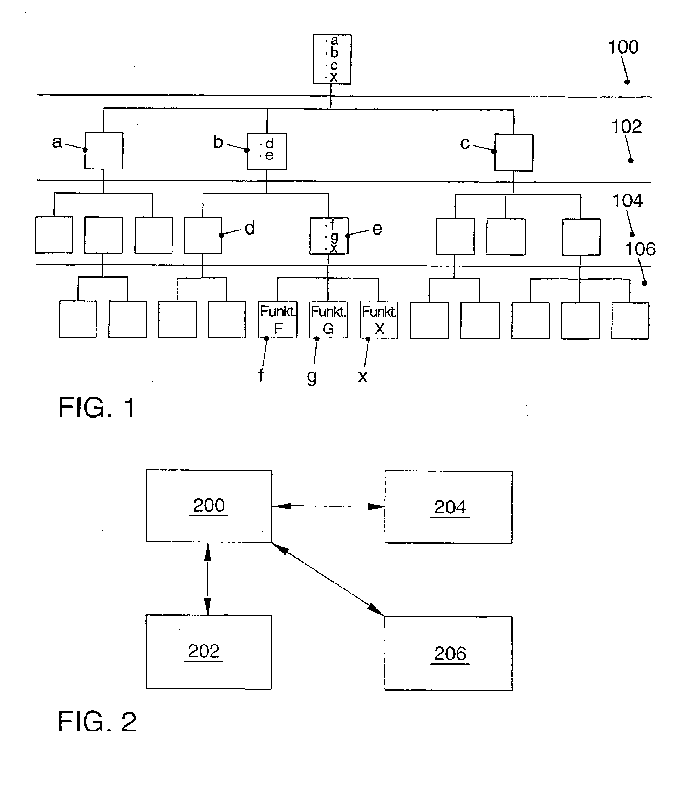

In Fig. 1 ist eine hierarchische Menüstruktur dargestellt. Die oberste Hierarchie-Ebene 100 weist Verzweigungsmöglichkeiten zu Menüpunkten a, b, c einer nächst tieferen Hierarchie-Ebene 102 auf. Die Hierarchie-Ebene 102 weist in ihrem Menüpunkt b eine Verzweigung auf die Menüpunkte d und e einer tieferen Hierarchie-Ebene 104 sowie eine nicht dargestellte Rücksprungfunktion in die oberste Hierarchie-Ebene 100 auf. Die Hierarchie-Ebene 104 weist in ihrem Menüpunkt e eine Verzweigung auf in der nächsten Hierarchie-Ebene 106 verfügbaren Funktionen F, G und X auf, sowie eine nicht dargestellte Rücksprungfunktion sowohl in die nächst höhere Hierarchie-Ebene 102 als auch in die oberste Hierarchie-Ebene 100 auf. Die Funktionen F, G und X sind über die Menüpunkte f, g und x der Hierarchie-Ebene 106 ansteuerbar.

In Abhängigkeit der aktuellen Fahrsituation wird in der obersten Hierarchie-Ebene 100 zusätzlich zu den Verzweigungen zu den Menüpunkten der nächsten Hierarchie-Ebene 102 a, b, c eine Auswahl der Funktion X zur Verfügung gestellt. Die Funktion X bewirkt, daß der Außenspiegel der Beifahrerseite eingeklappt wird. Legt der Fahrer den Rückwärtsgang ein, so ist es in einigen Fällen hilfreich, wenn der Rückspiegel der Beifahrerseite eingeklappt ist. Das ist dann besonders von Vorteil, wenn aus einer engen Einfahrt zurückgesetzt werden muß. Bei einem Einparken ist jedoch der Rückspiegel der Beifahrerseite notwendig. Dadurch, daß dem Fahrer in der obersten Hierarchie-Ebene 100 die Funktion X des Einklappens des Rückspiegels zur Verfügung gestellt wird, kann er direkt beim Einlegen des Rückwärtsganges entscheiden, ob er diese Funktion in Anspruch nehmen möchte und kann diese auch direkt auswählen. Er muß nicht durch die Hierarchie-Ebenen 100, 102, 104 und 106 navigieren, um zur Funktion X zu gelangen.

In Fig. 2 ist eine Auswahleinrichtung 200 dargestellt. In der Auswahleinrichtung 200 ist eine in Fig. 1 dargestellte hierarchische Menüstruktur gespeichert. Die Anzeigeeinrichtung 204 zeigt das Menü der aktuellen Hierarchie-Ebene der in der Auswahleinrichtung 200 gespeicherten Menüstruktur an. Die Menüstruktur läßt sich mit Hilfe von Auswahlmitteln 206 durchsuchen. Entsprechend den Eingaben der Auswahlmittel 206 ändert sich das in der Anzeigeeinrichtung 204 dargestellte Menü. Der Benutzer kann unter Verwendung der Auswahlmittel 206 die gesamte Menüstruktur in der Auswahleinrichtung 200 durchsuchen. Funktionen, die in der Menüstruktur angeboten werden, lassen sich auch mit Hilfe der Auswahlmittel aktivieren.

Die Auswerteeinrichtung 202 wertet die aktuelle Fahrsituation aus. Anhand der ermittelten aktuellen Fahrsituation wird ein Signal an die Auswahleinrichtung übermittelt. Passend zu der aktuellen Fahrsituation wird durch die Auswahleinrichtung in der obersten Hierarchie-Ebene 100 eine Funktion bereitgestellt. Diese Funktion sieht der Fahrer in der Anzeigeeinrichtung 204 und kann sie mit Hilfe der Auswahlmittel 206 aktivieren.

Legt der Fahrer den Rückwärtsgang ein, so wird dies durch die Auswerteeinrichtung 202 registriert. Die Auswerteeinrichtung 202 übermittelt an die Auswahleinrichtung 200, daß eine für das Rückwärtsfahren sinnvolle Funktion in der obersten Hierarchie-Ebene 100 angeboten werden soll. Die Auswahleinrichtung 200 ermittelt die benötigte Funktion und stellt diese in der obersten Hierarchie-Ebene 100 zur Verfügung. In diesem Fall ist dies das Einklappen des Rückspiegels. Über die Anzeigeeinrichtung 204 wird dem Fahrer die Verfügbarkeit dieser Funktion X in der obersten Hierarchie-Ebene 100 angezeigt. Der Fahrer muß nicht die gesamte Hierarchie-Ebenen 100-106 durchlaufen, um zu der Funktion X des Einklappens des Rückspiegels zu gelangen. Wenn dem Fahrer ein Einklappen des Rückspiegels sinnvoll erscheint, so kann er mit Hilfe der Auswahlmittel 206 diese Funktion anwählen und aktivieren.

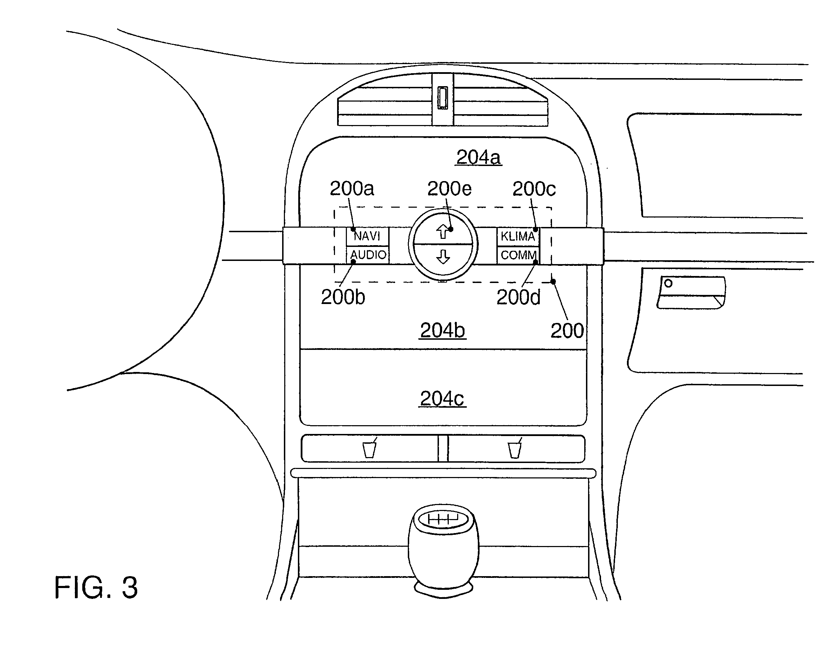

Eine Anordnung einer vorbeschriebenen Vorrichtung ist in Fig. 3 dargestellt. Die Anzeigeeinrichtung 204 sowie die Auswahleinrichtung 200 ist in der Mittelkonsole eines Kraftfahrzeugs integriert. Die Anzeigeeinrichtung weist drei Bildschirme 204 a-c auf. Die drei Bildschirme zeigen Auswahlinformationen geordnet nach Prioritäten an. Dabei zeigt der Bildschirm 204 a die Auswahlinformationen mit der höchsten Priorität an. Die beiden Bildschirme 204 b, c zeigen Auswahlinformationen mit einer niedrigeren Priorität an. Beispielsweise kann die Klimasteuerung zu Beginn einer Fahrt in Bildschirm 204 a angezeigt werden, da der Fahrer zu Beginn einer Fahrt die Temperatur einstellen möchte. Nach einer gewissen Fahrstrecke hat sich die Temperatur eingeregelt und es besteht nur noch selten ein Änderungsbedarf. Die Anzeige der Klimasteuerung kann vom Bildschirm 204 a entfernt werden.

Auch können auf den Bildschirmen individuell gewünschte Auswahltasten angezeigt werden. Vom Benutzer nicht gewünschte Tasten können entfernt oder per drag-anddrop zur Beifahrerseite, aus der direkten Umgebung des Fahrers hinaus, transferiert werden. Die Größe der Tasten kann auch frei konfiguriert werden.

Weiterhin können sehr häufig genutzte Funktionen durch permanent belegte Tasten verfügbar gemacht werden. Die Tasten 200 a-e Stellen solche Funktionen zur Verfügung. Die Taste 200a ermöglicht einen direkten Zugriff auf die Navigation. Dabei wird dann in Bildschirm 204a das Navigationsinterface angezeigt. Die Taste 200b ermöglicht die Anzeige der Radiosteuerung direkt auf Bildschirm 204 a. Über die Taste 200c kann die Klimasteuerung aus einer unteren Menüebene auf eine obere Menüebene gehoben werden. Dadurch wird die Klimasteuerung z.B. direkt in Bildschirm 204 b angezeigt. Über die Taste 000d kann das Autotelefon und eine Sprachwahlfunktion aktiviert werden. Die Tasten 200e ermöglichen eine Navigation in der Menüstruktur und die Auswahl einer bestimmten Fahrzeugfunktion.

Durch die beschriebene Vorrichtung sowie das beschriebene Verfahren, welche eine mögliche vorteilhafte Ausgestaltung darstellen, wird der Fahrer nicht vom aktuellen Verkehrsgeschehen abgelegt, wodurch die Verkehrssicherheit erhöht wird. Außerdem werden die benötigten Funktionen schnell und komfortabel zur Verfügung gestellt.

### BEZUGSZEICHENLISTE

- 100-106: Hierarchie-Ebene
- a - g: Menüpunkte
- F, G, X: Funktionen
- 200: Auswahleinrichtung
- 200 a-e: Auswahltaster
- 202: Auswerteeinrichtung
- 204: Anzeigeeinrichtung
- 204 a-c: Bildschirme
- 206: Auswahlmittel

## Patentansprüche

1. Verfahren zur Auswahl von Fahrzeugfunktionen (F, G, X) in einem Kraftfahrzeug, bei welchem den Fahrzeugfunktionen (F, G, X) zugeordnete Auswahlinformationen (a-x) in einer im wesentlichen hierarchischen Menüstruktur (100-106) angeordnet werden, bei welchem die im wesentlichen hierarchische Menüstruktur (100-106) zur Auffindung zumindest einer Auswahlinformation (x) durch einen Benutzer durchlaufen wird, bei welchem aus der im wesentlichen hierarchischen Menüstruktur (100-106) die zumindest eine Auswahlinformation (x) durch den Benutzer ausgewählt wird, und bei welchem die der zumindest einen Auswahlinformation (x) zugeordneten Fahrzeugfunktionen (F, G, X) durch die Benutzerwahl aktiviert werden, **dadurch gekennzeichnet, daß** zumindest eine Auswahlinformation (x) in Abhängigkeit einer Vorgabe wie beispielsweise einer Vorgabe in Abhängigkeit von einer Fahrsituation oder auch in Abhängigkeit von Benutzervorgaben, in einer obersten Menüebene (100) der im wesentlichen hierarchischen Menüstruktur (100-106) angeordnet wird, wodurch die zumindest eine in der obersten Menüebene (100) angeordnete Auswahlinformation (x) durch den Benutzer direkt auswählbar wird.

2. Verfahren nach Anspruch 1, **dadurch gekennzeichnet, daß** die Vorgabe in Abhängigkeit einer Fahrsituation bestimmt wird.

3. Verfahren nach Anspruch 1, **dadurch gekennzeichnet, daß** die Vorgabe in Abhängigkeit einer Benutzervorgabe bestimmt wird.

4. Verfahren nach einem der Ansprüche 1 bis 3, **dadurch gekennzeichnet, daß** die im wesentlichen hierarchische Menüstruktur (100-106) mit Hilfe einer Anzeigeeinrichtung (200) dargestellt wird.

5. Verfahren nach einem der Ansprüche 1 bis 4, **dadurch gekennzeichnet, daß** mit Hilfe der Anzeigeeinrichtung (200) die zumindest eine Auswahlinformation (x) in Abhängigkeit der Vorgabe in zumindest einem Abschnitt der Anzeigeeinrichtung (200) dargestellt wird.

6. Verfahren nach einem der Ansprüche 1 bis 5, **dadurch gekennzeichnet, daß** die Auswahlinformationen (a-x) als alphanumerische Zeichen dargestellt werden.

7. Verfahren nach einem der Ansprüche 1 bis 6, **dadurch gekennzeichnet, daß** die Auswahlinformationen (a-x) als Piktogramme dargestellt werden.

8. Verfahren nach einem der Ansprüche 1 bis 7, **dadurch gekennzeichnet, daß** die zumindest eine in der obersten Menüebene (100) angezeigte Auswahlinformation (x) akustisch ausgegeben wird und daß diese zumindest eine ausgegebene Auswahlinformation (x) durch den Benutzer akustisch ausgewählt wird.

9. Verfahren nach einem der Ansprüche 1 bis 8, **dadurch gekennzeichnet, daß** die zumindest eine in Abhängigkeit von der Vorgabe in der obersten Menüebene (100) angeordnete Auswahlinformation (x) durch den Benutzer festgelegt wird und daß diese Auswahl gespeichert wird.

10. Vorrichtung zur Auswahl von Fahrzeugfunktionen (F, G, X) in einem Kraftfahrzeug, zur Verwirklichung eines Verfahrens nach einem der Ansprüche 1 bis 9, wobei eine Auswahleinrichtung (200) vorgesehen ist, **dadurch gekennzeichnet, daß** die Auswahleinrichtung (200) eine Anordnung von Auswahlinformationen (a-x) in Abhängigkeit von einer Vorgabe wie beispielsweise einer Vorgabe in Abhängigkeit von einer Fahrsituation, oder auch in Abhängigkeit von Benutzervorgaben, in einer im wesentlichen hierarchischen Menüstruktur (100 - 106) ermöglicht, und daß die Auswahleinrichtung (200) eine Anordnung zumindest einer durch die Vorgabe bestimmte Auswahlinformation (x) in der obersten Menüebene (100) ermöglicht.

11. Vorrichtung nach Anspruch 10, **dadurch gekennzeichnet, daß** eine Auswerteeinrichtung (202) vorgesehen ist, wobei die Auswerteeinrichtung eine Auswertung einer aktuelle Fahrsituation und eine Übermittlung an die Auswahleinrichtung (200) bewirkt..

12. Vorrichtung nach Anspruch 10 oder 11, **dadurch gekennzeichnet, daß** eine die in der Auswahleinrichtung (200) gespeicherte, im wesentlichen hierarchische Menüstruktur (100-106) anzeigende Anzeigeeinrichtung (204) vorgesehen ist.

13. Vorrichtung nach Anspruch 12, **dadurch gekennzeichnet, daß** die Anzeigeeinrichtung zumindest einen Bildschirm aufweist.

14. Vorrichtung nach einem der Ansprüche 12 oder 13, **dadurch gekennzeichnet, daß** zumindest zwei Bildschirme vorgesehen sind, wobei ein erster Bildschirm Auswahlinformationen in Abhängigkeit einer ersten Vorgabe anzeigt und wobei ein zweiter Bildschirm Auswahlinformationen in Abhängigkeit einer zweiten Vorgabe anzeigt.

15. Vorrichtung nach einem der Ansprüche 10 bis 14, **dadurch gekennzeichnet, daß** die Auswahleinrichtung Navigationsmittel (206) zur Navigation in der im wesentlichen hierarchischen Menüstruktur (100-106) aufweist.

16. Vorrichtung nach Anspruch 15, **dadurch gekennzeichnet, daß** die Navigationsmittel zumindest zwei Auswahltaster aufweisen.

17. Vorrichtung nach einem der Ansprüche 15 oder 16, **dadurch gekennzeichnet, daß** die Navigationsmittel in der Anzeigeeinrichtung integriert sind, wobei die Anzeigeinrichtung eine berührungsempfindliche Anzeige aufweist.

18. Vorrichtung nach einem der Ansprüche 10 bis 17, **dadurch gekennzeichnet, daß** die Auswahleinrichtung Auswahlmittel (206) zur Auswahl einer Auswahlinformation (x) aufweist.

19. Vorrichtung nach einem der Ansprüche 12 bis 14, **dadurch gekennzeichnet, daß** die Auswahlmittel in der Anzeigeeinrichtung integriert sind, wobei die Anzeigeinrichtung eine berührungsempfindliche Anzeige aufweist.

20. Vorrichtung nach einem der Ansprüche 10 bis 19, **dadurch gekennzeichnet, daß** eine akustische Ausgabeeinrichtung vorgesehen ist, wobei die akustische Ausgabeeinrichtung eine akustische Ausgabe der in der Auswahleinrichtung (200) gespeicherten, im wesentlichen hierarchischen Menüstruktur (100-106) ermöglicht.

21. Vorrichtung nach einem der Ansprüche 10 bis 20, **dadurch gekennzeichnet, daß** die Vorrichtung in der Mittelkonsole eines Kraftfahrzeugs vorgesehen ist.

## Claims

1. Method for selecting vehicle functions (F, G, X) in a motor vehicle, in which selection information items (a-x) associated with the vehicle functions (F, G, X) are arranged in an essentially hierarchical menu structure (100-106), in which the essentially hierarchical menu.structure (100-106) is examined by a user in order to find at least one selection information item (x), in which the at least one selection information item (x) is selected from the essentially hierarchical menu structure (100-106) by the user, and in which the vehicle functions (F, G, X) associated with the at least one selection information item (x) are activated by the user selection, **characterized in that** at least one selection information item (x) is arranged in a topmost menu level (100) of the essentially hierarchical menu structure (100-106) on the basis of a stipulation, such as a stipulation on the basis of a driving situation or else on the basis of user stipulations, as a result of which the at least one selection information item (x) arranged in the topmost menu level (100) becomes able to be selected directly by the user.

2. Method according to Claim 1, **characterized in that** the stipulation is determined on the basis of a driving situation.

3. Method according to Claim 1, **characterized in that** the stipulation is determined on the basis of a user stipulation.

4. Method according to one of Claims 1 to 3, **characterized in that** the essentially hierarchical menu structure (100-106) is displayed using a display device (200).

5. Method according to one of Claims 1 to 4, **characterized in that** the display device (200) is used to display the at least one selection information item (x) in at least one section of the display device (200) on the basis of the stipulation.

6. Method according to one of Claims 1 to 5, **characterized in that** the selection information items (a-x) are displayed as alphanumeric characters.

7. Method according to one of Claims 1 to 6, **characterized in that** the selection information items (a-x) are displayed as pictograms.

8. Method according to one of Claims 1 to 7, **characterized in that** the at least one selection information item (x) displayed in the topmost menu level (100) is output audibly, and **in that** this at least one output selection information item (x) is selected audibly by the user.

9. Method according to one of Claims 1 to 8, **characterized in that** the at least one selection information item (x) arranged in the topmost menu level (100) on the basis of the stipulation is defined by the user and **in that** this selection is stored.

10. Apparatus for selecting vehicle functions (F, G, X) in a motor vehicle, for the purpose of implementing a method according to one of Claims 1 to 9, where a selection device (200) is provided, **characterized in that** the selection device (200) allows selection information items (a-x) to be arranged in an essentially hierarchical menu structure (100-106) on the basis of a stipulation, such as a stipulation on the basis of a driving situation or else on the basis of user stipulations, and **in that** the selection device (200) allows at least one selection information item (x) determined by the stipulation to be arranged in the topmost menu level (100).

11. Apparatus according to Claim 10, **characterized in that** an evaluation device (202) is provided, the evaluation device prompting evaluation of a current driving situation and transmission to the selection device (200).

12. Apparatus according to Claim 10 or 11, **characterized in that** a display device (204) displaying the essentially hierarchical menu structure (100-106) stored in the selection device (200) is provided.

13. Apparatus according to Claim 12, **characterized in that** the display device has at least one screen.

14. Apparatus according to either of Claims 12 and 13, **characterized in that** at least two screens are provided, where a first screen displays selection information items on the basis of a first stipulation and where a second screen displays selection information items on the basis of a second stipulation.

15. Apparatus according to one of Claims 10 to 14, **characterized in that** the selection device has navigation means (206) for navigation in the essentially hierarchical menu structure (100-106).

16. Apparatus according to Claim 15, **characterized in that** the navigation means have at least two selection pushbutton switches.

17. Apparatus according to either of Claims 15 and 16, **characterized in that** the navigation means are integrated in the display device, the display device having a touch-sensitive display.

18. Apparatus according to one of Claims 10 to 17, **characterized in that** the selection device has selection means (206) for selecting a selection information item (x).

19. Apparatus according to one of Claims 12 to 14, **characterized in that** the selection means are integrated in the display device, the display device having a touch-sensitive display.

20. Apparatus according to one of Claims 10 to 19, **characterized in that** an audible output device is provided, the audible output device allowing audible output of the essentially hierarchical menu structure (100-106) stored in the selection device (200).

21. Apparatus according to one of Claims 10 to 20, **characterized in that** the apparatus is provided in the central console of a motor vehicle.

## Revendications

1. Procédé de sélection de fonctions (F, G, X) d'un véhicule automobile, dans lequel des informations de sélection (a-x) associées aux fonctions (F, G, X) du véhicule sont disposées dans une structure de menu (100-106) essentiellement hiérarchisée, dans lequel la structure de menu (100-106) essentiellement hiérarchisée est parcourue par un utilisateur pour découvrir au moins une information de sélection (x), dans lequel ladite au moins une informations de sélection (x) est sélectionnée par l'utilisateur dans la structure de menu (100-106) essentiellement hiérarchisée et dans lequel les fonctions (F, G, X) du véhicule associées à ladite au moins une information de sélection (x) sont activées par la sélection de l'utilisateur, **caractérisé en ce qu'**au moins une information de sélection (x) est disposée au niveau (100) le plus élevé de la structure de menu (100-106) essentiellement hiérarchisée en fonction d'un paramètre, par exemple un paramètre qui dépend de la situation de roulage ou de conditions introduites par l'utilisateur, ladite au moins une information de sélection (x) disposée au niveau le plus élevé (100) du menu pouvant être sélectionnée directement par l'utilisateur.

2. Procédé selon la revendication 1, **caractérisé en ce que** le paramètre est déterminé en fonction d'une situation de roulage.

3. Procédé selon la revendication 1, **caractérisé en ce que** le paramètre est déterminé en fonction d'une condition introduite par l'utilisateur.

4. Procédé selon l'une quelconque des revendications 1 à 3, **caractérisé en ce que** la structure de menu (100-106) essentiellement hiérarchisée est présentée.

5. Procédé selon l'une quelconque des revendications 1 à 4, **caractérisé en ce qu'**en fonction du paramètre, ladite au moins une information de sélection (x) est présentée à l'aide du dispositif d'affichage (200) dans au moins une partie du dispositif d'affichage (200).

6. Procédé selon l'une quelconque des revendications 1 à 5, **caractérisé en ce que** les informations de sélection (a-x) sont présentées sous la forme de signes alphanumériques.

7. Procédé selon l'une quelconque des revendications 1 à 6, **caractérisé en ce que** les informations de sélection (a-x) sont présentées sous la forme de pictogrammes.

8. Procédé selon l'une quelconque des revendications 1 à 7, **caractérisé en ce que** ladite au moins une information de sélection (x) présentée au niveau le plus élevé du menu (100) est délivrée acoustiquement et **en ce que** cette au moins une information de sélection (x) délivrée est sélectionnée acoustiquement par l'utilisateur.

9. Procédé selon l'une quelconque des revendications 1 à 8, **caractérisé en ce que** ladite au moins une information de sélection (x) disposée au niveau le plus élevé (100) du menu en fonction du paramètre est confirmée par l'utilisateur et **en ce que** cette sélection est conservée en mémoire.

10. Dispositif de sélection de fonctions (F, G, X) dans un véhicule automobile en vue de la mise en oeuvre d'un procédé selon l'une quelconque des revendications 1 à 9, dans lequel un dispositif de sélection (200), est prévu, **caractérisé en ce que** le dispositif de sélection (200) permet d'agencer les informations de sélection (a-x) dans une structure de menu (100-106) essentiellement hiérarchisée en fonction d'un paramètre, par exemple un paramètre qui dépend de la situation de roulage ou de conditions introduites par l'utilisateur, et **en ce que** le dispositif de sélection (200) permet d'agencer au niveau le plus élevé (100) du menu au moins une information de sélection (x) définie par le paramètre.

11. Dispositif selon la revendication 10, **caractérisé en ce qu'**il présente un dispositif d'évaluation (202), le dispositif d'évaluation effectuant l'évaluation de la situation de roulage en cours et sa transmission au dispositif de sélection (200).

12. Dispositif selon la revendication 10 ou 11, **caractérisé en ce qu'**il présente un dispositif d'affichage (204) qui affiche une structure de menu (100-106) essentiellement hiérarchisée conservée en mémoire dans le dispositif de sélection (200).

13. Dispositif selon la revendication 12, **caractérisé en ce que** le dispositif d'affichage présente au moins un écran.

14. Dispositif selon la revendication 12 ou 13, **caractérisé en ce qu'**il présente au moins deux écrans, un premier écran présentant des informations de sélection en fonction d'un premier paramètre et un deuxième écran présentant des informations de sélection en fonction d'un deuxième paramètre.

15. Dispositif selon l'une quelconque des revendications 10 à 14, **caractérisé en ce que** le dispositif de sélection présente des moyens de navigation (206) qui permettent la navigation dans la structure de menu (100-106) essentiellement hiérarchisée.

16. Dispositif selon la revendication 15, **caractérisé en ce que** les moyens de navigation présentent au moins deux touches de sélection.

17. Dispositif selon la revendication 15 ou 16, **caractérisé en ce que** les moyens de navigation sont intégrés dans le dispositif d'affichage, le dispositif d'affichage présentant un affichage tactile.

18. Dispositif selon l'une quelconque des revendications 10 à 17, **caractérisé en ce que** le dispositif de sélection présente des moyens de sélection (206) qui permettent la sélection d'une information de sélection (x).

19. Dispositif selon l'une quelconque des revendications 12 à 14, **caractérisé en ce que** les moyens de sélection sont intégrés dans le dispositif d'affichage, le dispositif d'affichage présentant un affichage tactile.

20. Dispositif selon l'une quelconque des revendications 10 à 19, **caractérisé en ce qu'**il présente un dispositif d'émission acoustique, le dispositif d'émission acoustique permettant l'émission acoustique de la structure de menu (100-106) essentiellement hiérarchisée conservée en mémoire dans le dispositif de sélection (200).

21. Dispositif selon l'une quelconque des revendications 10 à 20, **caractérisé en ce qu'**il est prévu dans la console centrale d'un véhicule automobile.
